# EUROPÄISCHE PATENTSCHRIFT

(11) **EP 1 842 614 B1**
(45) Veröffentlichungstag und Bekanntmachung des Hinweises auf die Patenterteilung: **20.05.2009**
(21) Anmeldenummer: 07005435.8
(22) Anmeldetag: 16.03.2007
(51) Int. Cl.: B23D 47/12, B23Q 5/10, B27B 5/32

(54) **Elektromotorischer Antrieb für Vielblattsägen oder dergleichen Bearbeitungsanlagen**
Electromotor drive for multi-blade saws or similar processing installations
Entraînement à moteur électrique pour scies alternatives ou installations de traitement analogues

(30) Priorität: 06.04.2006 DE 202006005747 U
(43) Veröffentlichungstag der Anmeldung: 10.10.2007
(73) Patentinhaber: Fischer, Peter, 74842 Billigheim (DE)
(72) Erfinder: Fischer, Peter, 74842 Billigheim (DE)
(74) Vertreter: Müller, Hans

(56) Entgegenhaltungen:
- DE-A1- 2 336 629
- DE-A1- 3 240 080
- US-A- 3 135 071

## Beschreibung

### TECHNISCHES GEBIET

Die Erfindung betrifft einen elektromotorischen Antrieb für Vielblattsägen oder dergleichen Bearbeitungsanlagen. Bei solchen Anlagen werden zum Beispiel Vielblattsägen im Holz- und Laminatfußbodenbereich benutzt, um große Platten in Streifen zu sägen. Jeder dieser Streifen wird dabei mit jeweils einer Säge aus der Platte herausgetrennt. Die der Anzahl der Streifen entsprechend vielen Sägen sind parallel nebeneinander angeordnet. Solche Streifenschneid-Anlagen werden aus wirtschaftlichen Gründen rund um die Uhr eingesetzt.

### STAND DER TECHNIK

Bekannte Vielblattsägen der vorstehend genannten Art besitzen einen axial relativ langen Motor. Die stirnseitig aus dem Motor herausragende Abtriebswelle ist mit einem rechtwinkligen Getriebe verbunden, so dass die Achse des Sägeblattes rechtwinklig zur Längsachse des Motors ausgerichtet ist. Auf diese Weise kann mit solchen Vielblattsägen eine Platte in relativ schmale Plattenstreifen auch mit relativ großen Sägemotoren zerteilt werden. Die einzelnen Streifen haben dabei eine Breite von minimal etwa 90 Millimetern. Solche Vielblattsägen haben sich bewährt. Nachteilig ist allerdings, dass ihre Winkelgetriebe sehr reparaturanfällig sind.

Die US 3135071 zeigt einen elektromotorischen Antrieb
- mit einem Elektromotor zum Antreiben eines Sägeblattes, einer Raspelscheibe oder eines vergleichbaren Werkzeuges,
- mit einer Aufnahme für das Werkzeug, die rotierbar an einer Rückwand des Antriebsgehäuses des elektromotorischen Antriebes befestigt ist,
- wobei die rotierbare Aufnahme ein elektromotorisch aktiver Teil des Elektromotors ist.

### DARSTELLUNG DER ERFINDUNG

Ausgehend von diesem Stand der Technik liegt der Erfindung die Aufgabe zugrunde, einen möglichst wirtschaftlichen motorischen Antrieb für Vielblattsägen oder dergleichen Bearbeitungsanlagen der eingangs genannten Art anzugeben, ohne in technischer Hinsicht Nachteile beim Zerteilen von Platten in Kauf nehmen zu müssen.

Diese Erfindung ist durch die Merkmale des Hauptanspruchs gegeben. Sinnvolle Weiterbildungen der Erfindung sind Gegenstand von sich an den Hauptanspruch anschließenden weiteren Ansprüchen.

Der elektromotorische Antrieb für die einzelne beispielsweise Säge einer Vielblattsägen-Anlage zeichnet sich dadurch aus, dass das Sägeblatt oder dessen rotierbare Sägeblattaufnahme als elektromotorisch aktiver Teil des Elektromotors ausgebildet ist. Dadurch kann die Bautiefe eines jeden Sägemotors so gering ausgebildet werden, dass auf ein Winkelgetriebe verzichtet werden kann.

Wie ein in der Zeichnung dargestelltes Ausführungsbeispiel zeigt, werden an dem Sägeblatt beziehungsweise an der Sägeblattaufnahme Permanentmagnete befestigt wie insbesondere angeklebt. Diese Permanentmagnete bilden einen Bestandteil des Elektromotors und damit des elektromotorischen Antriebes.

Weitere Einzelheiten und Vorteile der Erfindung und insbesondere des in der Zeichnung dargestellten Ausführungsbeispiels sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: einen Querschnitt durch einen mit einem Sägeblatt ausgestatteten elektromotorischen Antrieb nach der Erfindung,
- Fig. 2: eine perspektivische Ansicht dieses mit einem Sägeblatt ausgestatteten elektromotorischen Antriebes gemäß Fig. 1,
- Fig. 3: eine schematisierte Seitenansicht von zwei nebeneinander angeordneten Sägemotoren gemäß Fig. 2.

### WEGE ZUM AUSFÜHREN DER ERFINDUNG

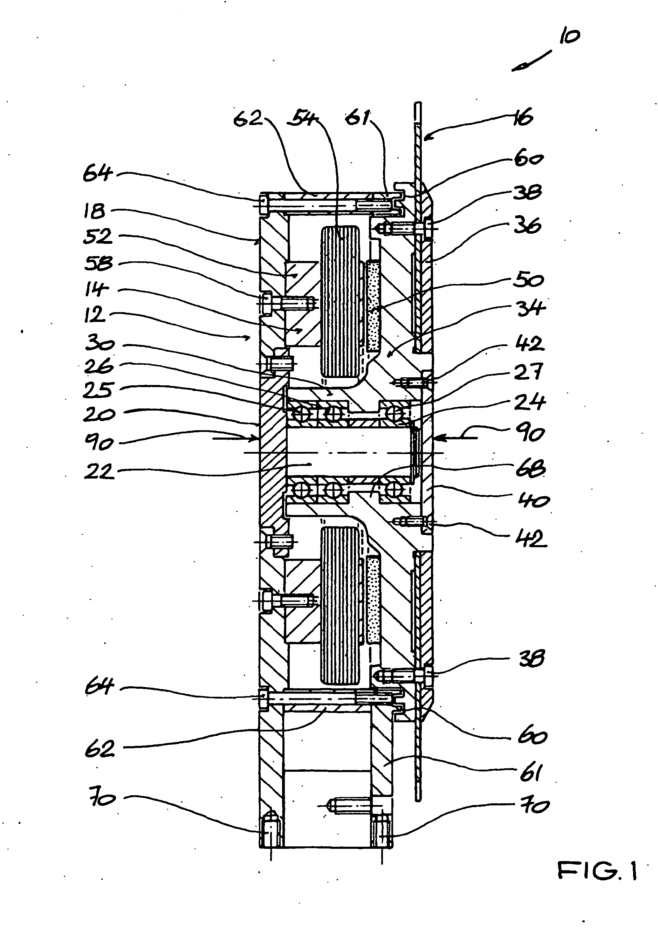

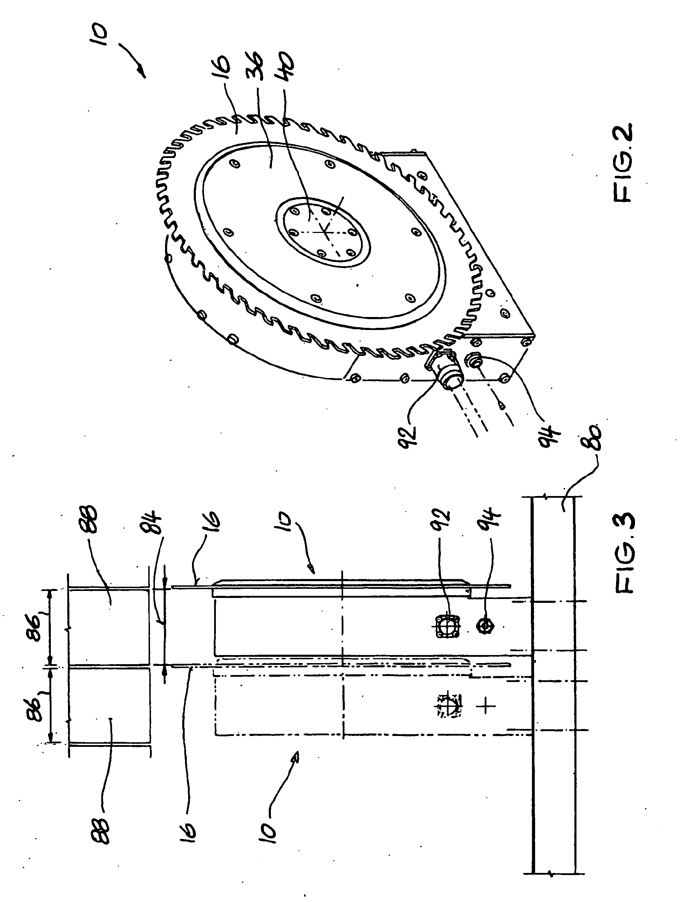

Der in Fig. 1 und 2 dargestellte Sägemotor 10 besitzt ein Gehäuse 12 mit einem Elektromotor 14 und einem Sägeblatt 16. Der Motor 14 bildet den elektromotorischen Antrieb für das Sägeblatt 16.

Bei dem Elektromotor handelt es sich um einen permanenterregten Synchronmotor, der mittels Elektronikregler stufenlos geregelt und abgebremst werden kann. Die Erzeugung des Drehmoments erfolgt über den Elektromagnetismus. Somit sind keine weiteren Elemente wie ein Getriebe im Einsatz, welches sehr stark dem Verschleiß unterliegt.

Das Gehäuse 12 besitzt eine Rückwand 18, in die eine Kreisscheibe 20 eingesetzt ist, deren Außenseite mit der Außenseite der Rückwand 18 fluchtet. An der Kreisscheibe 20 ragt senkrecht ein Lagerzapfen 22 aus, auf dem ein Drehlager 24 mit drei Lager 25, 26, 27 befestigt ist. Das Drehlager 24 wird von einer Art Hülse 30 umgeben, die um den Lagerzapfen 22 rotierbar ist.

Die Hülse 30 ist einteiliger Bestandteil einer in Art einer Scheibe ausgebildeten Sägeblattaufnahme 34. An der bezogen auf die Figur rechten Außenseite der Aufnahme 34 liegt das Sägeblatt 16 an. Das Sägeblatt 16 wird in seiner in Fig. 1 dargestellten Lage gehalten durch eine Stützscheibe 36, die mittels Befestigungsschrauben 38 an der Aufnahme 34 befestigt ist.

Die Stützscheibe 36 besitzt eine zentrale Aussparung, die durch eine zentrale Deckscheibe 40 abgedeckt ist. Diese Deckscheibe 40 ist über Befestigungsschrauben 42 ebenfalls in der Aufnahme 34 befestigt. Die Deckscheibe 40 deckt den Lagerzapfen 22 mit dem Drehlager 24 nach außen hin ab.

Auf der Innenseite der Aufnahme 34 sind umlaufend Permanentmagnete 50 angeklebt. Diesen Permanentmagneten 50 liegen unter Freilassen eines kleinen Ringspaltes den Stator 52 des Elektromotors bildende Blechpakete gegenüber, die jeweils von einer Drahtwicklung 54 umgeben sind. Diese Blechpakete sind über Befestigungsschrauben 58 an der Rückwand 18 angeschraubt.

Der radial äußere Umfangsbereich der Aufnahme 34 liegt unter Ausbildung einer Labyrinth-Dichtung 60 an einer ringartigen Gehäuseplatte 61 an. Zwischen dieser Gehäuseplatte 61 und der Rückwand 18 ist ein Gehäusering 62 vorhanden. Die Gehäuseplatte 61 ist über umfangmäßig verteilte Befestigungsschrauben 64 an der Rückwand 18 befestigt. Dabei greifen die Befestigungsschrauben 64 durch den Gehäusering 62 hindurch.

Die Aufnahme 34 wird in ihrer Position auf dem Drehlager 24 gehalten durch eine in den Bereich des Drehlagers 24 hineinragende Ringschulter 68.

Im - bezogen auf die Fig. 1- unteren Bereich sowohl der Rückwand 18 als auch der ringartigen Gehäuseplatte 61 sind Aufnahmebohrungen 70 vorgesehen, über die der Sägemotor 10 an einen Unterbau 80 der entsprechenden Vielblattsägeanlage befestigt wie insbesondere angeschraubt werden kann. In Fig. 3 sind schematisiert zwei derartige nebeneinander angeordnete Sägemotoren 10 dargestellt. Der lichte Abstand 84 zwischen den beiden Sägeblättern 16 der beiden einander benachbarten Sägemotoren 10 entspricht größenmäßig der Breite 86 von Plattenstreifen 88, die mit solchen Vielblattsägen aus einer entsprechend großen Platte hergestellt werden können. Die Summe der Breiten 86 der aus einer Platte herauszusägenden Plattenstreifen 88 ist bedingt durch die Stärken der vorhandenen Sägeblätter 16 kleiner als die Breite der betreffenden Platte. Im vorliegenden Beispielsfall ist die Tiefe 90 des Gehäuses 12 (Fig. 1) etwa 85 Millimeter groß. Unter Berücksichtigung eines gegenseitigen Abstands von 2 bis 3 Millimeter zwischen benachbarten Sägemotoren 10 kann der lichte Abstand 84 und damit die Breite 86 eines Plattenstreifens 88 ebenfalls etwa 85 Millimeter groß beziehungsweise klein sein.

Neben einem Anschluss 92 für elektrischen Strom ist ein Anschluss 94 für Druckluft vorhanden (Fig. 2, 3). Die in das Innere des Gehäuses 12 hineingeleitete Druckluft entweicht langsam über die Labyrinth-Dichtung 60 nach außen. Dadurch wird verhindert, dass Sägestaub und dergleichen Schmutzbestandteile in das Innere des Gehäuses hineindringen können.

Statt des Sägeblattes 16 könnte auch eine Raspelscheibe oder ein anderes rotierbares Werkzeug vorgesehen werden.

## Patentansprüche

1. Elektromotorischer Antrieb für Vielblattsägen zum Streifenschneiden im Holz- und Laminatfußbodenbereich oder dergleichen Bearbeitungsanlagen,
- mit einem Elektromotor (14) zum Antreiben eines Sägeblattes (16), einer Raspelscheibe oder eines vergleichbaren Werkzeuges,
- mit einer scheibenartigen Aufnahme (34) für das Werkzeug, die rotierbar an einer Rückwand (18) eines Antriebsgehäuses (12) des elektromotorischen Antriebes befestigt ist,
- wobei die rotierbare Aufnahme (34) ein elektromotorisch aktiver Teil des Elektromotor (14) ist, und wobei
- das Werkzeug (16) lösbar an der einen Scheibenseite der Aufnahme (34) befestigt ist, und
- Permanentmagnete (50) an der dazu anderen, gegenüber liegenden Scheibenseite der Aufnahme (34) befestigt wie insbesondere angeklebt sind.

2. Elektromotorischer Antrieb nach Anspruch 1,
- **dadurch gekennzeichnet, dass**
- an der Rückwand (18) des Antriebsgehäuses (12) von Drahtwicklungen (54) umgebende, den Stator (52) bildende Blechpakete befestigt wie insbesondere angeschraubt sind.

3. Elektromotorischer Antrieb nach einem der vorstehenden Ansprüche,
- **dadurch gekennzeichnet, dass**
- ein Lagerzapfen (22) auskragend an der Rückwand (18, 20) des Antriebsgehäuses (12) befestigt ist,
- die Aufnahme (34) mit einer an ihr fest angebrachten Lagerhülse (30) auf dem Lagerzapfen (22) rotierbar gelagert ist.

4. Elektromotorischer Antrieb nach Anspruch 3,
- **dadurch gekennzeichnet, dass**
- ein Dreifach-Drehlager (24) zwischen dem Lagerzapfen (22) und der Lagerhülse (30) vorhanden ist.

5. Elektromotorischer Antrieb nach Anspruch 3 oder 4,
- **dadurch gekennzeichnet, dass**
- die Lagerhülse (30) und die Aufnahme (34) ein einteiliges Bauteil sind.

6. Elektromotorischer Antrieb nach einem der vorstehenden Ansprüche,
- **dadurch gekennzeichnet, dass**
- eine das Werkzeug (16) seitlich bedeckende Stützscheibe (36) an der Aufnahme (34) lösbar befestigt ist.

7. Elektromotorischer Antrieb nach einem der vorstehenden Ansprüche,
- **dadurch gekennzeichnet, dass**
- eine das Drehlager (24) seitlich bedeckende zentrale Deckscheibe (40) an der Aufnahme (34) lösbar befestigt ist.

8. Elektromotorischer Antrieb nach Anspruch 5 und/oder 6,
- **dadurch gekennzeichnet, dass**
- die Außenseite der Stützscheibe (36) und die Außenseite der zentralen Deckscheibe (40) miteinander fluchten.

9. Elektromotorischer Antrieb nach einem der vorstehenden Ansprüche,
- **dadurch gekennzeichnet, dass**
- die Tiefe (90) des elektromotorischen Antriebes, das heißt der Abstand zwischen der Außenseite der Rückwand (18) und der das Werkzeug (16) bedeckenden Stützscheibe(36) etwa 85 Millimeter beträgt.

10. Elektromotorischer Antrieb nach einem der vorstehenden Ansprüche,
- **dadurch gekennzeichnet, dass**
- in dem Inneren des Gehäuses (12) ein Gas-Überdruck aufrechterhaltbar ist.

11. Elektromotorischer Antrieb nach Anspruch 10,
- **dadurch gekennzeichnet, dass**
- zwischen der rotierbaren Aufnahme (34) und dem nicht rotierbaren Gehäuseteil eine Labyrinth-Dichtung (60) vorhanden ist.

## Claims

1. Electromotive drive for multiple-blade saws for cutting strips in the field of wood and laminate flooring, or similar processing arrangements,
- having an electric motor (14) for driving a saw blade (16), a rasping disc or a comparable tool,
- having a disc-like holder (34) for the tool, which holder is fixed in a rotatable manner to a rear wall (18) of a drive housing (12) of the electromotive drive,
- with the rotatable holder (34) being an electromotively active part of the electric motor (14), and with
- the tool (16) being fixed in a detachable manner to one disc side of the holder (34), and
- permanent magnets (50) being fixed, in particular adhesively bonded, to the other, opposite disc side of the holder (34).

2. Electromotive drive according to Claim 1,
- **characterized in that**
- laminated cores which are surrounded by wire windings (54) and form the stator (52) are fixed, in particular screwed, to the rear wall (18) of the drive housing (12).

3. Electromotive drive according to either of the preceding claims,
- **characterized in that**
- a bearing pin (22) is fixed in a projecting manner to the rear wall (18, 20) of the drive housing (12),
- the holder (34) is rotatably mounted on the bearing pin (22) by way of a bearing sleeve (30) which is firmly attached to the said holder.

4. Electromotive drive according to Claim 3,
- **characterized in that**
- a triple-action rotary bearing (24) is provided between the bearing pin (22) and the bearing sleeve (30).

5. Electromotive drive according to Claim 3 or 4,
- **characterized in that**
- the bearing sleeve (30) and the holder (34) are an integral component.

6. Electromotive drive according to one of the preceding claims,
- **characterized in that**
- a supporting disc (36) which covers the sides of the tool (16) is fixed in a detachable manner to the holder (34).

7. Electromotive drive according to one of the preceding claims,
- **characterized in that**
- a central covering disc (40) which covers the sides of the rotary bearing (24) is fixed in a detachable manner to the holder (34).

8. Electromotive drive according to Claim 5 and/or 6,
- **characterized in that**
- the outer face of the supporting disc (36) and the outer face of the central covering disc (40) are aligned with one another.

9. Electromotive drive according to one of the preceding claims,
- **characterized in that**
- the depth (90) of the electromotive drive, that is to say the distance between the outer face of the rear wall (18) and the supporting disc (36) which covers the tool (16), is approximately 85 millimetres.

10. Electromotive drive according to one of the preceding claims,
- **characterized in that**
- an excess gas pressure can be maintained in the interior of the housing (12).

11. Electromotive drive according to Claim 10,
- **characterized in that**
- a labyrinth seal (60) is provided between the rotatable holder (34) and the non-rotatable housing part.

## Revendications

1. Entraînement à moteur électrique pour scies multilames destinées à la coupe de bandes dans le domaine des planchers en bois et en stratifié ou installations d'usinage analogues,
- avec un moteur électrique (14) pour entraîner une lame de scie (16), un disque à râper ou un outil analogue,
- avec un élément récepteur (34) en forme de disque pour l'outil, qui est fixé à rotation sur une paroi arrière (18) d'un carter d'entraînement (12) de l'entraînement à moteur électrique,
- l'élément récepteur (34) rotatif étant une partie électromotrice active du moteur électrique (14) et
- l'outil (16) étant fixé de manière détachable sur un des côtés du disque de l'élément récepteur (34) et
- des aimants permanents (50) étant fixés, en particulier collés, sur l'autre côté du disque, opposé, de l'élément récepteur (34).

2. Entraînement à moteur électrique selon la revendication 1,
- **caractérisé en ce que**
- des empilages de tôles formant le stator (52), entourés d'enroulements en fils (54), sont fixés, en particulier vissés, sur la paroi arrière (18) du carter d'entraînement (12).

3. Entraînement à moteur électrique selon l'une des revendications précédentes,
- **caractérisé en ce que**
- un tourillon (22) est fixé en saillie sur la paroi arrière (18, 20) du carter d'entraînement (12),
- l'élément récepteur (34) est monté à rotation sur le tourillon (22) avec une douille palier (30) montée sur lui de manière fixe.

4. Entraînement à moteur électrique selon la revendication 3,
- **caractérisé en ce que**
- un palier rotatif triple (24) est présent entre le tourillon (22) et la douille palier (30).

5. Entraînement à moteur électrique selon la revendication 3 ou 4,
- **caractérisé en ce que**
- la douille palier (30) et l'élément récepteur (34) sont un composant en une pièce.

6. Entraînement à moteur électrique selon l'une des revendications précédentes,
- **caractérisé en ce que**
- un disque d'appui (36) recouvrant latéralement l'outil (16) est fixé de manière détachable sur l'élément récepteur (34).

7. Entraînement à moteur électrique selon l'une des revendications précédentes,
- **caractérisé en ce que**
- un disque de recouvrement central (40) recouvrant latéralement le palier rotatif (24) est fixé de manière détachable sur l'élément récepteur (34).

8. Entraînement à moteur électrique selon la revendication 5 et/ou 6,
- **caractérisé en ce que**
- le côté extérieur du disque d'appui (36) et le côté extérieur du disque de recouvrement central (40) sont alignés l'un avec l'autre.

9. Entraînement à moteur électrique selon l'une des revendications précédentes,
- **caractérisé en ce que**
- la profondeur (90) de l'entraînement à moteur électrique, c'est-à-dire la distance entre le côté extérieur de la paroi arrière (18) et le disque d'appui (36) recouvrant l'outil (16), est d'environ 85 millimètres.

10. Entraînement à moteur électrique selon l'une des revendications précédentes,
- **caractérisé en ce que**
- une surpression de gaz peut être maintenue à l'intérieur du carter (12).

11. Entraînement à moteur électrique selon la revendication 10,
- **caractérisé en ce que**
- un joint à labyrinthe (60) est présent entre l'élément récepteur (34) rotatif et la partie de carter non rotative.
